# EUROPEAN PATENT APPLICATION

(11) **EP 3 838 809 A1**
(43) Date of publication of application: **23.06.2021**
(21) Application number: 19383155.9
(22) Date of filing: 19.12.2019
(51) Int. Cl.: B65G 17/08, B65G 17/10, B65G 17/40, B65G 17/46, B65G 47/51

(54) **TRANSPORT CHAIN AND GUIDE ELEMENT FOR TRANSPORT CHAINS**

(71) Applicant: Innovative Production Systems, S.L., 08243 Manresa (ES)
(72) Inventor: Junyent Masanés, Josep Mª, 08261 Cardona (ES)
(74) Representative: Clarke Modet & Co.

(57) **Abstract**

The invention relates to a transport chain for transport devices comprising a plurality of guide elements (10) configured to receive products (P), wherein said guide elements (10) have an asymmetric arrangement with respect to the axial axis (2ₓ) of the transport chain (2). A guide element for transport chains, comprising a support base (11) configured to receive products (P), delimited laterally by an interior wall (12i) and an exterior wall (13e) configured to prevent products (P) from falling during the transport thereof.

## Description

### Field of the invention

The present invention relates to a transport chain for moving products between an entry point and an exit point of the same, especially in transport devices, such as transporters, accumulators or dynamic flow regulators. The present invention also relates to a guide element for transport chains of the type indicated.

The present invention is especially ideal for application in the field of production logistics, enabling a wide variety of products, either industrial (parts, boxes...), cosmetics (bottles, jars...) and/or foodstuffs (bags, bottles, packages...), etc. to be transported.

### Background of the invention

The transport devices of the type indicated enable the in-line transport of products between various workstations present in manufacturing processes such as filling, packaging, labelling, etc. At present, there are various transport devices oriented to optimise the performance of said production lines.

Among these are dynamic flow regulators, also known as accumulators or buffers which serve to link two machines or workstations of one production line, temporarily enabling the transport flow in one of them to be interrupted and/or varied and not affecting the flow of the other one. To this end, they have a transport area and a retention or recovery area linked by a single continuous chain, i.e., without intermediate transfers over its entire journey. These transport chains are in general usually formed by a plurality of links joined one behind the other with a certain mobility such that the chain can curve during its journey.

The chain is usually loaded in the transport area, that is to say, with objects arranged thereon for the transport thereof between the two stations. On the other hand, the chain is empty in the recovery area. Both areas are joined by a displaceable cart which enables the possible flow variations between the entry and exit to be compensated. For example, if it is stopped or the speed of the transport chain is reduced in the entry of the device, without stopping or reducing the exit speed, said cart is displaced in one direction to reduce the length of the chain section in the product area. In the opposite case, in other words, if it is stopped or the speed of the exit is reduced, without stopping or reducing the entry speed, said cart is displaced in an opposite direction to increase the length of the chain section in the product area. Consequently, the volume of products in the transport area, i.e., the capacity thereof, can be varied. The greater the volume of products in the transport area, the greater the interruption time and/or variation of the transport flow of the affected workstation can be. In other words, there is more time to reestablish and/or compensate the transport flow without affecting the rest of the production line.

In any case, the maximum accumulation volume of these regulators and that of any other transport device in general that has a chain which travels a long journey, such as a transporter, is precisely determined by the length of said transport chain. The longer the chain, the greater the accumulation volume.

The dynamic flow regulator of document ES2400901A1 offers a multilevel solution or a solution with multiple tiers that enables long-length transport chains to be implemented in the smallest possible space. Specifically, said regulator comprises a transport chain arranged to receive a plurality of products, which is configured to be displaced in a closed circuit for transporting said products from an entry point to an exit point of the same. Redirections arranged at different heights between the entry point and the exit point accompany the movement of the chain to define the curves of its journey, causing the same to rotate 90° or 180° on its passage through each one of said redirections. Each level or tier is formed by a plurality of redirections all arranged in a horizontal plane with respect to the ground, the different levels of the device constituting different horizontal planes parallel to one another. An inclined section joins the upper level to the lower level.

In spite of the high accumulation volume that this device achieves, it has the particularity that the transport chain must carry out constant changes in the direction of rotation thereof along its journey between the entry point and the exit point with the aim of being able to extend or expand in each one of the horizontal planes that form the levels or tiers. In other words, the transport chain carries out as many rotations to the right (clockwise direction) as rotations to the left (counterclockwise direction).

Therefore, the transport chains of the transport devices of the type indicated generally have a symmetric configuration with respect to the axial axis thereof and/or lack guide elements arranged thereon which protrude laterally from one of their sides, since when these extensions are situated on the interior side of the curve due to the changes of direction, they would interfere and/or collide with each other, preventing the advance of the chain.

The solution to these problems can be carried out by using transport devices with a configuration that enables the transport chains thereof to maintain a single direction of rotation (clockwise or counterclockwise) during their entire journey from the entry point of the objects to the exit point of the same. Thus allowing the integration and/or installation of guide elements in an asymmetric arrangement with respect to the axial axis of the transport chain, configured to protrude only through the exterior side thereof.

However, at present, the existence of transport chains with guide elements in an asymmetric arrangement and guide elements with an asymmetric configuration which can work with these types of one-way transport devices is not known.

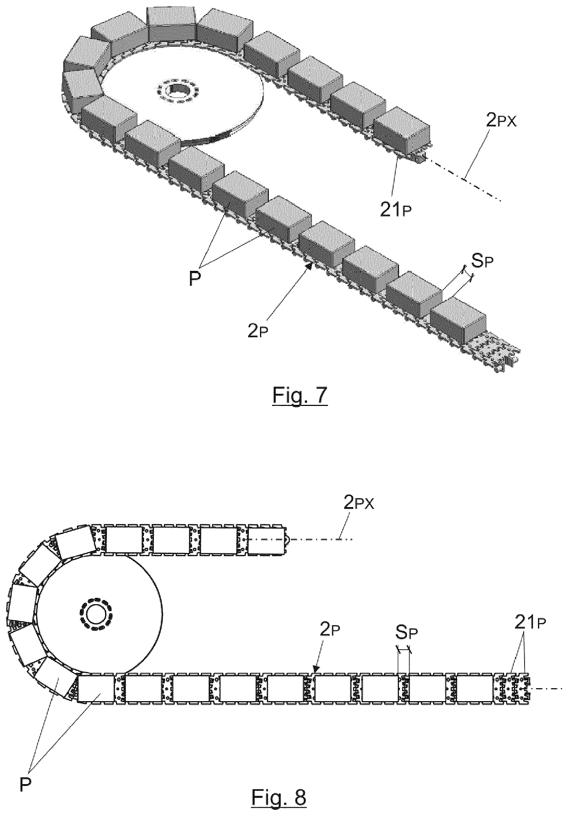

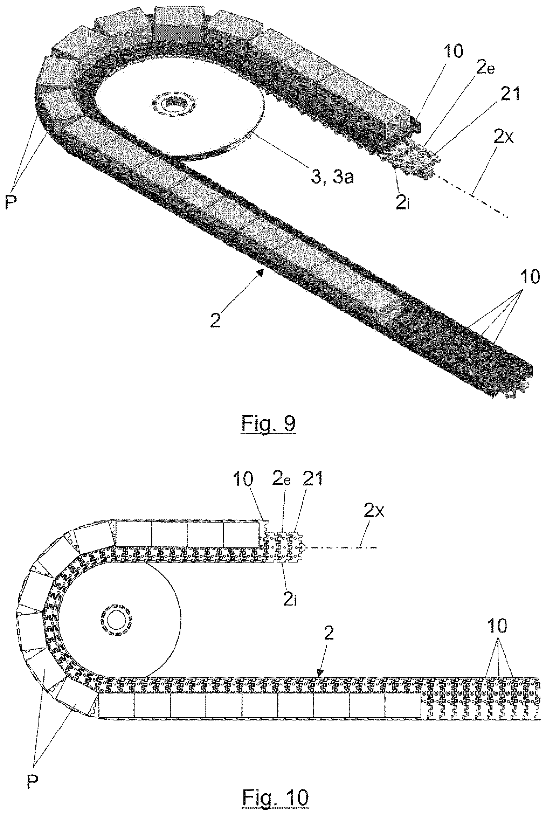

The present invention relates to a transport chain with guide elements in an asymmetric arrangement with respect to the axial axis thereof and/or configured to protrude only through the exterior side thereof, as well as a guide element with an asymmetric configuration whose use in the one-way transport devices is advantageous for various reasons. Firstly, they enable the guides or fixed lateral rails to be removed over the entire journey of the chain, which are used to help to guide the transported products and/or to prevent the accidental falling of the same, especially when the chain curves. The removal of these guides or fixed lateral rails is of interest because they are usually the direct cause of blockages due to the fiction exerted by the products against the same. Dispensing with these fixed rails also helps to simplify the device and increase accessibility to the transport chain for repair and/or maintenance purposes. Secondly, said guide elements increase the transport space of the products in terms of width, if they have a wider support base than the chain, enabling larger products to be transported, which is especially relevant in products with little rigidity. Thirdly, they offer flexibility and adaptability for the transport device, given that they can be replaced with other guide elements having a different geometry and/or size to enable other products to be transported. And last but not least, because they allow a greater number and/or density of products to be arranged along the transport chain (Figures 9 and 10), given they do not become blocked in the curves due to lack of space if they arrive too close and/or stuck together, as occurs with conventional chains (Figures 7 and 8). Therefore, the transport devices obtained enable objects to be transported and/or accumulated in a more stable and efficient manner, without blockages with less adjustments due to changes of product, and with greater optimisation of the space which allows there to be greater accumulation volumes of products.

### Description of the invention

The transport chain of the present invention comprises a plurality of guide elements configured to receive products, wherein said guide elements have an asymmetric arrangement with respect to the axial axis of the transport chain.

The guide elements preferably protrude laterally from an exterior side of the transport chain.

Preferably, the guide elements individually have a greater width than the width of the transport chain, thereby enabling larger products to be transported.

However, it should be noted that there is the possibility of arranging guide elements on the transport chain which individually have the same width or even smaller width than the width of the transport chain, also having an asymmetric arrangement with respect to the axial axis thereof. Thus, said decentring with respect to the axial axis can also be achieved, giving the guide element a slope that forces the products to pass through the exterior part of the curves, with the aim of achieving the effect of greater accumulation of products, shown in Figures 9 and 10.

The guide elements can adopt various geometric configurations, preferably being complementary and/or designed to remain partially overlapped between consecutive guide elements. This allows the guide elements arranged consecutively to fit and/or be coupled more tightly together, leaving fewer gaps, openings and/or spaces between them. In other words, offering improved guiding of the products and a greater useful support surface to receive the same, with the aim of preventing them from slipping and/or becoming blocked in the confluence area between two consecutive guide elements. On the other hand, said coupling has a determined clearance by means of which a certain angular displacement is achieved between consecutive guide elements, which is necessary so that the transport chain can curve along its journey.

According to a preferred embodiment, each guide element comprises a support base configured to receive the products, laterally delimited by an interior wall and an exterior wall configured to prevent products from falling during the transport thereof, acting as a barrier or lateral rail.

The interior wall preferably comprises:
- an interior overlap extension configured to be overlapped with the interior wall of a preceding securing element; and
- an interior snap-in depression configured to house an interior overlap extension of a subsequent securing element.

In this manner, the coupling between consecutive guide elements remains free from lateral gaps or openings through the interior face of the transport chain, both in the straight sections and in the curves, thereby preventing the products from becoming blocked among one another and/or accidentally falling.

The exterior wall preferably comprises:
- an exterior overlap extension configured to be overlapped with the exterior wall of a preceding securing element; and
- an exterior snap-in depression configured to house an exterior snap-in extension of a subsequent securing element.

In this manner, the coupling between consecutive guide elements remains free from lateral gaps or openings through the exterior face of the transport chain, both in the straight sections and in the curves, thereby preventing the products from becoming blocked among one another and/or accidentally falling.

Each guide element preferably comprises:
- a first toothed profile; and
- a second toothed profile opposed to the first toothed profile;
where both toothed profiles are complementary.

In this manner, the coupling between consecutive guide elements has fewer gaps or spaces on the transport chain, thereby preventing the products from becoming blocked and/or slipping between said guide elements. Additionally, they can have lower protectors in the manner of flexible sheet which extend horizontally under the support base to cover the gaps that are opened in the exterior part of the transport chain on its passage through the curves.

The guide elements can constitute independent elements of the transport chain, configured to be installed on the same or form an integral part of said transport chain.

According to a first example, the transport chain is formed by a plurality of links wherein each guide element is configured to be installed on one or more links of the transport chain and to enable the subsequent removal thereof. To this end, each guide element preferably comprises one or more holes made for the passage of fixing elements. Although other fixing systems may involve the use of adhesives, clamps, etc.

According to a second example, the transport chain is formed by a plurality of links, wherein each guide element forms an integral or inseparable part of a link of the transport chain.

The transport chain is preferably for an accumulator or dynamic flow regulator.

The present invention also relates to a guide element for transport chains in general and more specifically for transport chains of accumulators or dynamic flow regulators.

Said guide element can adopt various geometric configurations, preferably being complementary and/or designed to remain partially overlapped between consecutive guide elements. This allows the guide elements arranged consecutively to fit and/or couple more tightly together, leaving fewer gaps, openings and/or spaces between them. In other words, offering improved guiding of the products and a greater useful support surface to receive the same, with the aim of preventing them from slipping and/or becoming blocked in the confluence area between two consecutive guide elements. On the other hand, said coupling has a determined clearance by means of which a certain angular displacement is achieved between consecutive guide elements, which is necessary so that the transport chain can curve along its journey.

The guide element preferably comprises a support base configured to receive products, laterally delimited by an interior wall and an exterior wall configured to prevent products from falling during the transport thereof.

The interior wall preferably comprises:
- an interior overlap extension configured to be overlapped with the interior wall of a preceding securing element; and
- an interior snap-in depression configured to house an interior overlap extension of a subsequent securing element.

In this manner, the coupling between consecutive guide elements remains free from lateral gaps or openings through the interior face of the transport chain, both in the straight sections and in the curves, thereby preventing the products from becoming blocked among one each other and/or accidentally falling.

The exterior wall preferably comprises:
- an exterior overlap extension configured to be overlapped with the exterior wall of a preceding securing element; and
- an exterior snap-in depression configured to house an exterior snap-in extension of a subsequent securing element.

In this manner, the coupling between consecutive guide elements remains free from lateral gaps or openings through the exterior face of the transport chain, both in the straight sections and in the curves, thereby preventing the products from becoming blocked among one each other and/or accidentally falling.

The guide element preferably comprises:
- a first toothed profile; and
- a second toothed profile opposed to the first toothed profile;
wherein both toothed profiles are complementary.

In this manner, the coupling between consecutive guide elements has fewer gaps or spaces on the transport chain, thereby preventing the products from becoming blocked and/or slipping between said guide elements. Additionally, they can have lower protectors in the manner of flexible sheet which extend horizontally under the support base to cover the gaps that are opened in the exterior part of the transport chain on its passage through the curves.

The guide element preferably comprises one or more holes enabled for the passage of fixing elements. Although other systems for fixing to and/or installation on the transport chain may involve the use of adhesives, clamps, etc.

The guide element preferably incorporates a link to form a transport chain, chaining it to other guide elements.

The support base preferably has a greater width than the width of the link, thereby larger products can be transported.

The support base is preferably arranged asymmetrically with respect to the axial axis of the link, comprising an extension that protrudes laterally from one of the sides of the link on which the exterior wall is located.

### Brief description of the drawings

A series of drawings will be briefly described below which helps to better understand the invention and which expressly relates to various embodiments of the invention which are presented as non-limiting examples of the same.
Figure 1 represents a perspective schematic view of a transport device with the transport chain of the present invention arranged in a first position of product accumulation.
Figure 2 represents a perspective schematic view of a transport device with the transport chain of the present invention arranged in a second position of product accumulation.
Figure 3 represents a plan view of the transport device of Figure 1, without showing the displaceable cart.
Figure 4 represents a partial plan view of the transport chain of the present invention.
Figure 5a represents a first perspective view of the securing element of the present invention according to a first embodiment of the same.
Figure 5b represents a second perspective view of the securing element of Figure 5a.
Figure 5c represents a plan view of the securing element of Figure 5a.
Figure 5d represents a front view of the securing element of Figure 5a.
Figure 5e represents a side view of the securing element of Figure 5a.
Figure 6a represents a first perspective view of the securing element according to a second embodiment of the same.
Figure 6b represents a second perspective view of the securing element of Figure 6a.
Figure 6c represents a plan view of the securing element of Figure 6a.
Figure 6d represents a front view of the securing element of Figure 6a.
Figure 6e represents a side view of the securing element of Figure 6a.
Figure 7 represents a perspective schematic view by way of example of the transport of objects by means of a conventional transport chain.
Figure 8 represents a plan view of Figure 7.
Figure 9 represents a perspective schematic view by way of example of the transport of objects by means of the transport chain of the present invention.
Figure 10 represents a plan view of Figure 9.

### Detailed description of the invention

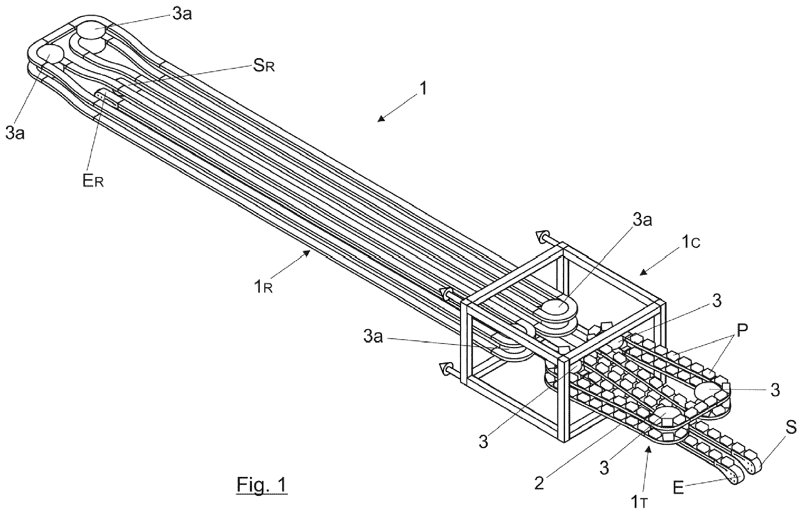

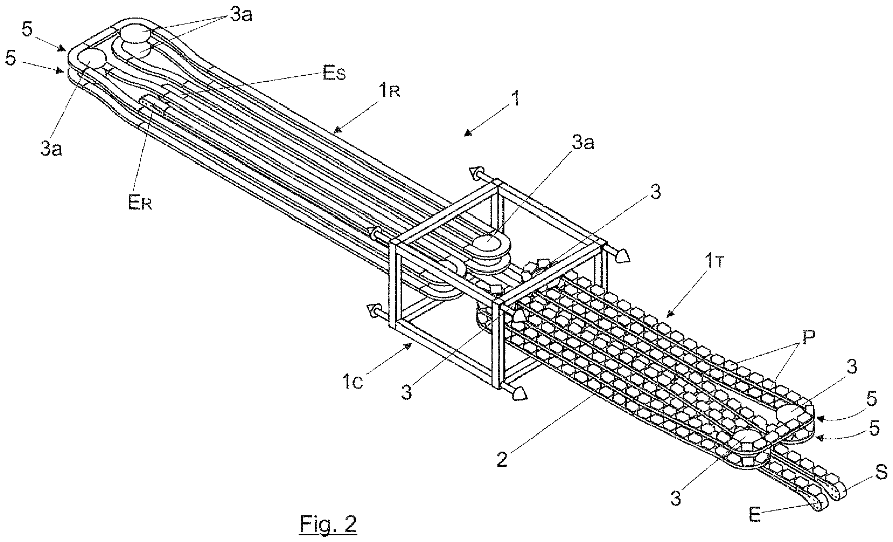

Figures 1 to 3 show different views of a transport device (1) with the transport chain (2) of the present invention. For better clarity and understanding of the figures, a large part of the structural and functional elements of the transport device (1), such as the chassis, the casing, the motors and traction elements of the transport chain, sliding guides of the cart, control elements, etc., as well as the guide elements (10) themselves have not been illustrated.

In said example, a dynamic flow regulator is shown, also known as an accumulator or buffer, formed by a transport area (1T) and a recovery area (1R), joined by a displaceable cart (1C). In this case, the transport device (1) comprises two transport tiers (5) each one with four channels (4).

As can be seen in Figures 1 to 3, the transport device (1) comprises:
- a transport chain (2) arranged to receive a plurality of products (P), which is configured to be displaced in a closed circuit to transport said products (P) from an entry point (E) to an exit point (S) of the same; and
- a plurality of redirections (3) arranged at a different height between the entry point (E) and the exit point (S), each one configured to cause a rotation (ω₂) of the transport chain (2).

All the rotations (ω₂) of the transport chain (2) are carried out in the same direction of rotation, in this case illustrated in the counterclockwise direction, over its entire journey from the entry point (E) to the exit point (S).

The transport chain (2) is also configured to be displaced from an entry regulation point (E_{R}) to an exit regulation point (S_{R}), comprising:
- an entry return section (2_{RE}) that joins the transport chain (2) between the entry point (E) and the entry regulation point (E_{R}); and
- an exit return section (2_{RS}) that joins the transport chain (2) between the exit point (S) and the exit regulation point (S_{R}).

A single continuous transport chain (2) extends between the transport area (1T) and the recovery area (1R) which starts its journey at the entry point (E) of the transport area, it is displaced towards the exit point (S) of said area, turns along the interior face of the transport chain (2) towards the exit regulation point (S_{R}), returns to the upper face of the same, where it starts its journey through the recovery area (1R) to the entry regulation point (E_{R}), turns along the interior face of the transport chain (2) to return to the entry point (E), where it restarts the journey.

The transport device (1) in the recovery area (1R) comprises:
- a plurality of regulation redirections (3a) arranged at a different height between the entry regulation point (E_{R}) and the exit regulation point (S_{R}), each one configured to cause a rotation (ω₂) of the transport chain (2).

All the rotations (ω₂) of the transport chain (2) are carried out in the same direction of rotation, also counterclockwise, on its journey from the entry regulation point (E_{R}) to the exit regulation point (S_{R}), said direction of rotation coinciding with the direction of rotation of the rotations (ω₂) of the transport chain (2) on its journey from the entry point (E) to the exit point (S).

The redirections (3, 3a) located within the displaceable cart (1C) have a mobile character, being displaced with the same to increase or reduce the length of the chain section in the product area. Moreover, the redirections (3, 3a) arranged outside of the displaceable cart (1C) have a fixed character.

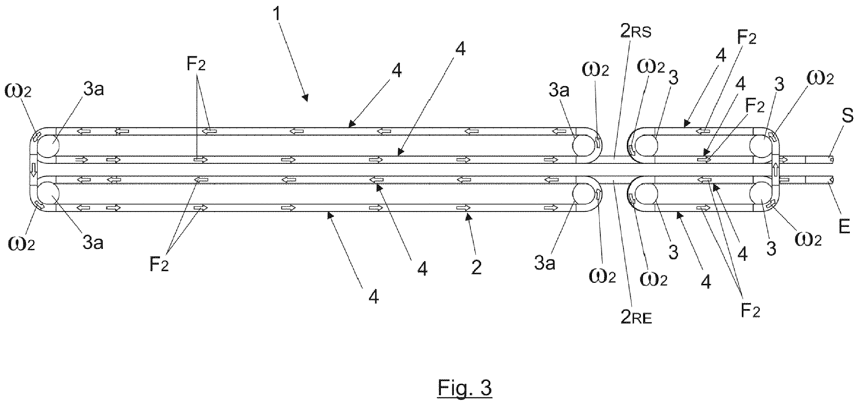

As can be seen in Figure 3, the transport chain (2) has alternating and opposite directions of advance (F₂) between adjacent channels (4), maintaining, in spite of this, a single direction of rotation.

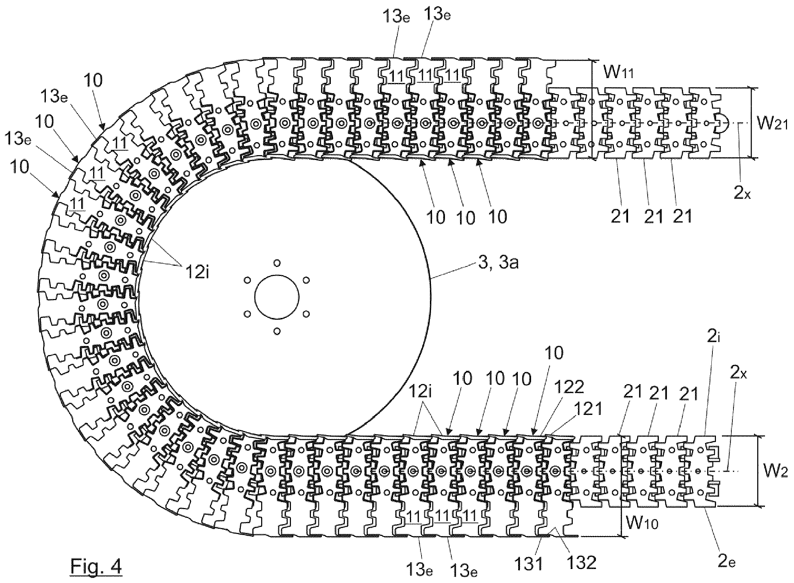

Figure 4 shows a partial plan view of the transport chain (2) of the present invention, arranged on one of the redirections (3, 3a) of the transport device (1) of the previous example. As can be seen, the transport chain (2) comprises a plurality of guide elements (10) configured to receive the products (P). Said guide elements (10) can be arranged continuously along the entire transport chain (2) or discontinuously only in some sections thereof.

The guide elements (10) have an asymmetric arrangement with respect to the axial axis (2ₓ) of the transport chain (2), protruding laterally from the exterior side (2e) of the transport chain (2).

The guide elements (10) individually have a width (W₁₀) greater than the width (W₂) of the transport chain (2).

The guide elements (10) adopt a complementary geometric configuration designed to remain partially overlapped between consecutive guide elements (10). In this manner, the coupling between consecutive guide elements (10) remains free from lateral gaps or openings in the interior face (2i) and in the exterior face (2e) of the transport chain (2).

The transport chain (2) is formed by a plurality of links (21) joined one behind the other with certain mobility such that the chain can curve during its journey. As will be seen below, the links (21) can be independent of the guide elements (10), or form an integral part of the same. Each guide element (10) comprises a support base (11) configured to receive the products (P) that have a width (W₁₁) greater than the width (W₂₁) of each link (21) of the transport chain (2).

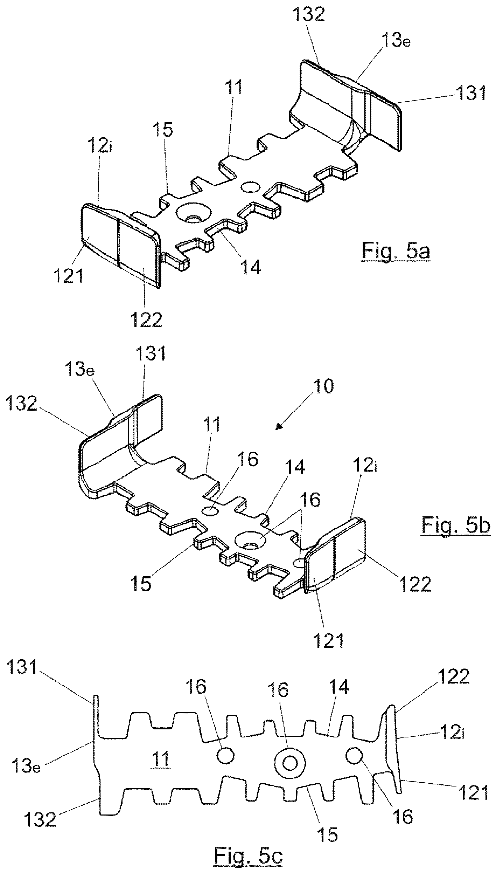

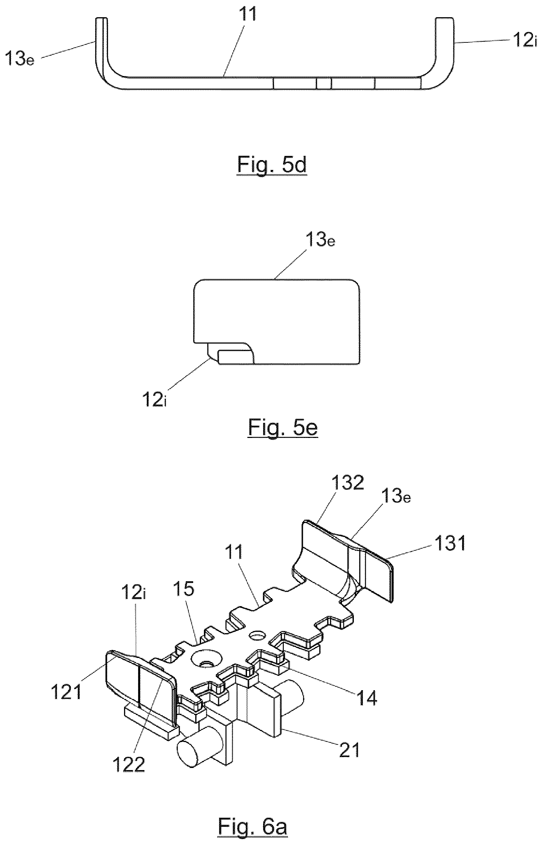

Figures 5a - 5e represent various views of a first example of the guide element (10) of the transport device (1) for any of the previous embodiments. In this case, each guide element (10) is configured to be installed on one or more links (21) of the transport chain (2) and enable the subsequent removal thereof.

Each guide element (10) comprises a support base (11) configured to receive the products (P), delimited laterally by an interior wall (12i) and an exterior wall (13e) configured to prevent products (P) from falling during the transport thereof.

The interior wall (12i) comprises:
- an interior overlap extension (121) configured to be overlapped with the interior wall (12i) of a preceding securing element (10); and
- an interior snap-in depression (122) configured to house an interior overlap extension (121) of a subsequent securing element (10).

The exterior wall (13e) comprises:
- an exterior overlap extension (131) configured to be overlapped with the exterior wall (13e) of a preceding securing element (10); and
- an exterior snap-in depression (132) configured to house an exterior snap-in extension (131) of a subsequent securing element (10).

Each guide element (10) comprises:
- a first toothed profile (14); and
- a second toothed profile (15) opposed to the first toothed profile (14);
where both toothed profiles (14, 15) are complementary.

Each guide element (10) comprises one or more holes (16) enabled for the passage of fixing elements, to enable the installation and removal thereof via the links (21) of the support chain (2).

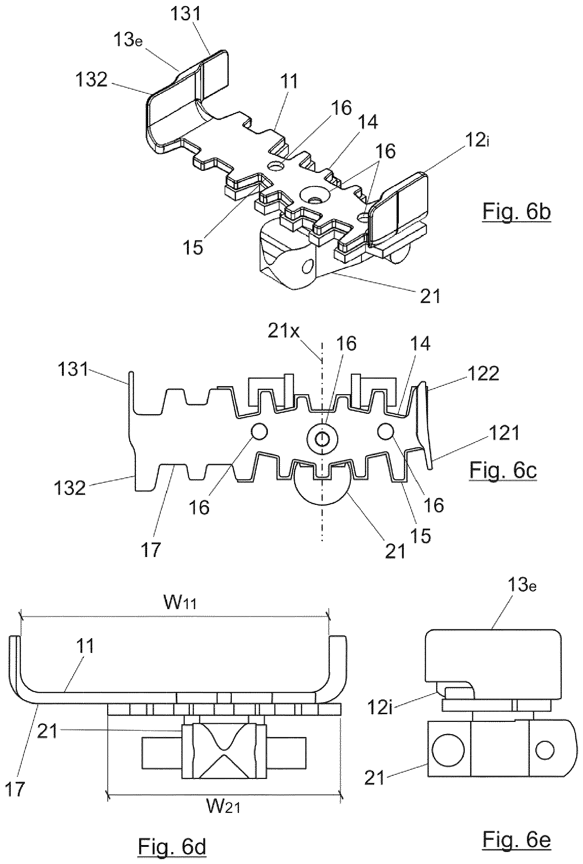

Figures 6a - 6e represent various views of a second example of the guide element (10) of the transport device (1) for any of the previous embodiments. In this case, each guide element (10) forms an integral part of a link (21) of the transport chain (2).

The support base (11) is arranged asymmetrically with respect to the axial axis (21ₓ) of the link (21), comprising an extension (17) that protrudes laterally from one of the sides of the link (21) on which the exterior wall (13e) is located. The rest of the technical features coincide with those of the example of the Figures 5a - 5e.

Figures 7 and 8 represent two schematic views by way of example of the transport of products (P) by means of a conventional transport device. As can be seen, the transport chain (2_{P}) is formed by a plurality of links (21_{P}) arranged according to an axial axis (2_{PX}). The transport chain (2_{P}) lacks guide elements such that the products are arranged directly on the links (21_{P}) of the transport chain (2_{P}), occupying the central part thereof. So that the products (P) do not become blocked in the curves given a lack of space due to the rotation of the links (21_{P}) which causes consecutive products (P) to move closer together, it is necessary to create a separation (S_{P}) between said products (P) when they are arranged on the transport chain (2_{P}). Said separation (S_{P}) results in a lower number and/or density of products (P) along the transport chain (2_{P}).

Figures 9 and 10 represent two schematic views by way of example of the transport of products (P) by means of a transport device (1) with the transport chain (2) of the present invention. As can be seen, the transport chain (2) comprises a plurality of guide elements (10). Said guide elements (10) have an asymmetric arrangement with respect to the axial axis (2ₓ) of the transport chain (2), protruding laterally from the exterior side (2e) of the same. The products are arranged directly on the guide elements (10), occupying the exterior part thereof and therefore remaining decentred with respect to the axial axis (2ₓ) of the transport chain (2) and further from the interior side of the same (2i). As such, the products (P) have more space in the curves to turn, and consequently, the approximation of consecutive products (P) is considerably prevented and/or reduced when turning. This enables the products (P) to be arranged on the guide elements (10) stuck to one another, that is to say, without a separation therebetween, which results in a greater number and/or density of products (P) along the transport chain (2).

## Claims

1. A transport chain for transport devices, said transport chain (2) **characterised in that** it comprises a plurality of guide elements (10) configured to receive products (P), wherein said guide elements (10) have an asymmetric arrangement with respect to the axial axis (2ₓ) of the transport chain (2).

2. The chain according to claim 1, **characterised in that** the guide elements (10) protrude laterally from an exterior side (2e) of the transport chain (2).

3. The chain according to any of claims 1 to 2, **characterised in that** the guide elements (10) individually have a width (W₁₀) greater than the width (W₂) of the transport chain (2).

4. The chain according to any of claims 1 to 3, **characterised in that** each guide element (10) comprises a support base (11) configured to receive products (P), delimited laterally by an interior wall (12i) and an exterior wall (13e) configured to prevent products (P) from falling during the transport thereof.

5. The chain according to claim 4, **characterised in that** the interior wall (12i) comprises:
• an interior overlap extension (121) configured to be overlapped with the interior wall (12i) of a preceding securing element (10); and
• an interior snap-in depression (122) configured to house an interior overlap extension (121) of a subsequent securing element (10).

6. The chain according to any of claims 4 to 5, **characterised in that** the exterior wall (13e) comprises:
• an exterior overlap extension (131) configured to be overlapped with the exterior wall (13e) of a preceding securing element (10); and
• an exterior snap-in depression (132) configured to house an exterior snap-in extension (131) of a subsequent securing element (10).

7. The chain according to any of claims 1 to 6, **characterised in that** each guide element (10) comprises:
• a first toothed profile (14); and
• a second toothed profile (15) opposed to the first toothed profile (14);
where both toothed profiles (14, 15) are complementary.

8. The chain according to any of claims 1 to 7, **characterised in that** the transport chain (2) is formed by a plurality of links (21), wherein each guide element (10) is configured to be installed on a link (21) of the transport chain (2) and enable the subsequent removal thereof.

9. The transport chain according to any of claims 1 to 8, **characterised in that** it is for an accumulator or dynamic flow regulator.

10. A guide element for transport chains, said guide element (10) **characterised in that** it comprises a support base (11) configured to receive products (P), delimited laterally by an interior wall (12i) and an exterior wall (13e) configured to prevent products (P) from falling during the transport thereof.

11. The element according to claim 11, **characterised in that** the interior wall (12i) comprises:
• an interior overlap extension (121) configured to be overlapped with the interior wall (12i) of a preceding securing element (10); and
• an interior snap-in depression (122) configured to house an interior overlap extension (121) of a subsequent securing element (10).

12. The element according to any of claims 10 to 11, **characterised in that** the exterior wall (13e) comprises:
• an exterior overlap extension (131) configured to be overlapped with the exterior wall (13e) of a preceding securing element (10); and
• an exterior snap-in depression (132) configured to house an exterior snap-in extension (131) of a subsequent securing element (10).

13. The element according to any of claims 10 to 12, **characterised in that** it comprises:
• a first toothed profile (14); and
• a second toothed profile (15) opposed to the first toothed profile (14);
where both toothed profiles (14, 15) are complementary.

14. The element according to any of claims 10 to 13, **characterised in that** it incorporates a link (21) to form a transport chain (2); **and in that** the support base (11) has a width (W₁₁) greater than the width (W₂₁) of the link (21).

15. The element according to claim 14, **characterised in that** the support base (11) is arranged asymmetrically with respect to the axial axis (21ₓ) of the link (21), comprising an extension (17) that protrudes laterally from one of the sides of the link (21) on which the exterior wall (13e) is located.
